## Europäisches Patentamt
## European Patent Office
## Office européen des brevets

(11) Veröffentlichungsnummer: **0 164 073 B1**

# EUROPÄISCHE PATENTSCHRIFT

(45) Veröffentlichungstag der Patentschrift: **31.10.90**

(51) Int. Cl.⁵: $C\ 01\ B\ 33/32$

(21) Anmeldenummer: **85106660.5**

(22) Anmeldetag: **30.05.85**

(54) **Verfahren zur hydrothermalen Herstellung klarer Natriumsilikatlösungen.**

(30) Priorität: **07.06.84 DE 3421158**

(43) Veröffentlichungstag der Anmeldung:
**11.12.85 Patentblatt 85/50**

(45) Bekanntmachung des Hinweises auf die
Patenterteilung:
**31.10.90 Patentblatt 90/44**

(84) Benannte Vertragsstaaten:
**AT BE CH DE FR GB IT LI NL**

(56) Entgegenhaltungen:
**EP-A-0 033 108**
**EP-A-0 085 867**
**BE-A- 649 739**
**DE-A-2 549 167**

(73) Patentinhaber: **Henkel Kommanditgesellschaft
auf Aktien
Postfach 1100 Henkelstrasse 67
D-4000 Düsseldorf-Holthausen (DE)**

(72) Erfinder: **Christophliemk, Peter, Dr.
Rudolf-Breitscheid-Strasse 61
D-4000 Düsseldorf 13 (DE)**
Erfinder: **Novotny, Rudolf, Dr.
Am Rittersberg 14
D-4000 Düsseldorf 13 (DE)**
Erfinder: **Laufenberg, Jürgen, Dr.
Scheidemannstrasse 5
D-5657 Haan 1 (DE)**

**Beschreibung**

Die vorliegende Erfindung betrifft ein verbessertes Verfahren zur Herstellung klarer Natriumsilikatlösungen aus Sand und Natronlauge unter hydrothermalen Reaktionsbedingungen und nachfolgende Filtration.

Von den unter der Bezeichnung "Wasserglas" bekannten Alkalimetallsilikatlösungen finden für technische Zwecke am häufigsten Natriumsilikatlösungen—gemeinhin als Natronwasserglas bezeichnet—Verwendung. Derartige Natronwassergläser weisen überwiegend einen Feststoffgehalt von etwa 30 bis 40 Gew.-% sowie ein Gewichtsverhältnis $SiO_2:Na_2O$ von 3,3 bis 3,4:1 auf.

Die Herstellung solcher Natronwassergläser in technischem Maßstab erfolgt im allgemeinen durch Zusammenschmelzen von Quarzsand und Soda in hierfür geeigneten Öfen bei Temperaturen im Bereich von 1400 bis 1500°C unter Freisetzung von $CO_2$. Die beim Abkühlen erstarrende Schmelze, das sogen nnte Stückenglas, wird anschließend in einem weiteren Verfahrensschritt unter Anwendung von Druck und erhöhter Temperatur in Wasser gelöst und die erhaltene Lösung, je nach Qualitätsanforderungen, gegebenenfalls filtriert.

Durch Vermischen solcher Lösungen mit Natronlauge lassen sich dann alkalireichere Natriumsilikatlösungen mit einem niedrigeren $SiO_2/Na_2O$-Gewichtsverhältnis gewinnen. Dieses Verfahren ist jedoch insbesondere zum Erhalt von besonders alkalireichen Wassergläsern mit einem Gewichtsverhältnis $SiO_2:Na_2O$ von etwa 2:1, wie es für verschiedene technische Einsatzzwecke und vor allem für Zeolith-Synthesen angestrebt wird, sowohl apparativ als auch hinsichtlich der erforderlichen Energiemengen sehr aufwendig und bedingt relativ hohe Energie- und Anlagenkosten.

Eine weitere Möglichkeit zur Herstellung von Natronwasserglässern besteht in einem Aufschluß von Sand mit Hilfe wässriger Natronlauge unter hydrothermalen Bedingungen. Die Verfahrensprinzipien für einen derartigen Hydrothermalprozeß sind zwar bereits seit langem bekannt (z.B. DE-PS 24 47 79 und Chemical Engineering 5, 76 (1962)). Wegen der nur unbefriedigenden Raum/Zeitausbeuten einerseits und erheblicher Schwierigkeiten bei der Abtrennung und Filtration der hochviskosen Reaktionslösung andererseits erlangten diese Verfahren jedoch bis vor weniger Jahren keinerlei großtechnische Bedeutung.

Gemäß BE-PS 64 97 39 lassen sich die Schwierigkeiten bei der Aufbereitung des Reaktionsgemisches dadurch umgehen, daß das Reaktionsprodukt von überschüssigen kieselsäurehaltigen Material und/oder von den unlöslichen verunreinigenden Stoffen mittels Filtrierelementen, die in der Nähe des Reaktorbodens angebracht sind, abgetrennt wird, wobei diese Filtration vorteilhaft unter ähnlichen Temperatur- und Druckbedingungen erfolgen soll, wie sie bei der vorangegangenen Hydrothermalsynthese herrschen. Die Gesamtreaktionszeit liegt bei ca. 8 bis 9 h.

In der EP—PS 0 033 108 wird dagegen eine Abtrennung dieser ungelösten Feinanteile außerhalb des Reaktors nach Entspannung und Abkühlung des Reaktionsgemisches auf etwa 100°C vorgenommen. Dieses unterschiedliche technische Konzept hat nicht nur erheblichen Einfluß auf den Aufbau der Anlage selbst, sondern auch auf die erzielbare Raum-/Zeitausbeute, Während nämlich bei Vorgehen gemäß BE-PS 64 97 39 eine etwa vierstündige Reaktionszeit sowie eine zumindest gleich lange Nebenzeit, insbesondere für die reaktorinterne Filtration, erforderlich sind, verringern sich gemäß EP-PS 0 033 108 die Reaktionszeit auf 60 bis 90 min und die Nebenzeiten auf etwa 30 min.

Im Hinblick auf ein kostenoptimales, mit dem oben angeführten Schmelz-/Löseverfahren konkurrenzfähiges Hydrothermalverfahren zur Herstellung von klaren Natriumsilikatlösungen aus Sand und Natronlauge mit einem Gewichtsverhältnis $SiO_2:Na_2O$ von etwa 2:1 ist die nach der genannten EP-PS erforderliche Reaktionszeit noch zu lang. Darüberhinaus erfordert ein hoher Sandüberschuß in der Reaktionsmischung das Recycling des nicht verbrauchten Sandes im Anschluß an die Filtration, was zusätzliche Kosten verursacht.

Aufgabe der vorliegenden Erfindung ist es, ein verbessertes Hydrothermalverfahren zur Herstellung klarer Natronwasserglaslösungen aus Sand und Natronlauge mit einem Gewichtsverhältnis $SiO_2:Na_2O$ von etwa 2:1 zu entwickeln, das für die Anwendung im großtechnischen Rahmen geeignet ist und die vorstehend aufgezeigten Nachteile nicht aufweist. Inbesondere betrifft die Aufgabenstellung die Erzielung einer möglichst hohen Raum-/Zeitausbeute bei Anwendung möglichst niedriger Temperaturen und damit einem möglichst geringen Energiebedarf.

Es wurde nämlich überraschenderweise gefunden, daß sich im Rahmen einer Hydrothermalsynthese unter speziellen Bedingungen die erforderlichen Reaktionszeiten zur Herstellung von Natronwasserglas der genannten Zusammensetzung erheblich verkürzen lassen, wobei gleichzeitig ein geringerer Energiebedarf erforderlich ist. Trotz verkürzter Reaktionszeiten läßt sich ein hoher Umsetzungsgrad der eingesetzten Reaktionskomponenten erzielen, der in einer relativ hohen $SiO_2$-Konzentration der gewonnen Natriumsilikatlösungen von bis zu 31 Gew.-% zum Ausdruck kommt. Es entstehen Natronwasserglaslösungen mit einem $SiO_2/Na_2O$-Gewichtsverhältnis von 1,9 bis 2,1:1, wie sie in wachsendem Umfang zur Gewinnung von Metasilikaten, Dihydrogenorthosilikathydraten und/oder zeolithischen Natriumaluminiumsilikaten Bedeutung erlangen, in sehr guten Raum-/Zeitausbeuten bei minimiertem Energieverbrauch.

Die Erfindung betrifft daher ein Verfahren zur hydrothermal Herstellung klarer Natriumsilikatlösungen mit einem Gewichtsverhältnis $SiO_2:Na_2O$ von 1,9 bis 2,1:1 durch Umsetzung von Sand mit mindestens 99 Gew.-% $SiO_2$, bezogen auf Trockensubstanz, mit wässriger Natriumhydroxidlösung einer Konzentration von 25 bis 35 Gew.-% bei Temperaturen im Bereich von 200 bis 230°C und den diesen Temperaturen entsprechenden Drücken von gesättigtem Wasserdampf in einem rotierenden zylindrischen geschlossenen Druckreaktor, der um seine horizontale Achse drehbar gelagert ist, sowie nachfolgender Normaldruck-Filtration des heißen, noch ungelösten Sand enthaltenden Reaktionsgemischs unter Verwendung des nicht umgesetzten Sandes als Filtermedium, das dadurch gekennzeichnet ist, daß man das einen Sandüberschuß von 5 bis 10 Gew.-%, bezogen auf den Silikatgehalt der angestrebten Natriumsilikatlösung, enthaltende Reaktionsgemisch in dem genannten Reaktor, der mehrere Feststoff-Mitnehmervorrichtungen zum Beispiel aus Nickel-Metall mit einer Fläche von 0,2 bis 1 m$^2$ pro Kubikmeter Reaktorleervolumen aufweist, bei einem Reaktorfüllgrad, bezogen auf das Gesamtleervolumen bei Raumtemperatur von 65 bis maximal 75 Volmen-% einschließlich des zum Aufheizen unmittelbar eingespeisten, möglichst feindispersen Wasserdampfes, bis zum Erreichen eines Wertes des Gewichtsverhältnisses SiO$_2$:Na$_2$O in der Reaktionslösung umsetzt, der 5 bis 10% unter dem angestrebten Wert liegt, direkt anschließend das Reaktionsgemisch durch Eigendruck in einer gesonderten Behälter überführt, wobei der Reaktorinhalt bis zu dem angestrebten Gewichtsverhältnis SiO$_2$:Na$_2$O von 1,9 bis 2,1:1 weiterreagiert, dabei das Reaktionsgemisch nach Entspannen auf Normaldruck unter Dampfabscheidung auf 95 bis 103°C abkühlt, wobei die Hydrothermalreaktion zum Stillstand kommt, und unter Verwendung des überschüssigen Sandes und gegebenenfalls eines zusätzlichen Filterhilfsmittels filtriert.

Wie nachstehend im einzelnen aufgezeigt wird, werden die Nachteile der Verfahren, die aus dem Stand der Technik bekannt sind, im wesentlichen dadurch überwunden, daß die Reaktionskomponente Sand in einem wesentlich geringeren Überschuß, als es bisher für sinnvoll gehalten wurde, eingesetzt wird, die Reaktionsführung durch Einbau verbesserter Anlagenteile optimiert wurde, für eine den großtechnischen Erfordernissen angepaßte Handhabbarkeit der heißen Reaktionslösung durch Einbau eines vereinfachten Entspannungsbehälters in die Hydrothermalanlage Sorge getragen wurde sowie ein weitgehender Rückgewinn der Prozeßenergie dadurch erreicht wurde, daß die Dampfbrüden zum Aufheizen der Natriumhydroxidlösung des folgenden Verfahrenszyklus verwendet werden und die Restwärme einer prozeßexternen Nutzung zugeführt wird.

Beispielsweise werden die Raum-/Zeitausbeuten der Hydrothermalreaktion, bezogen auf die reine Reaktionszeit, gegenüber der Verfahrensweise in der EP—A—0 033 108 verdoppelt.

Zur Durchführung des erfindungsgemäßen Verfahrens wird ein rotierender zylindrischer Druckreaktor eingestetzt, der um seine horizontale Achse drehbar gelagert ist. Dieser Druckreaktor weist an seiner Innenwand Feststoffmitnehmer-Vorrichtungen auf, die bevorzugt in radialer Anordnung angeschweißt sind. In einer bevorzugten Ausführungsform bestehen diese Mitnehmervorrichtungen, genau wie die Innenauskleidung des Reaktors, aus Nickel-Metall. Die Feststoffmitnehmer-Vorrichtungen weisen eine Fläche von insgesamt 0,2 bis 1,0 m$^2$ pro Kubikmeter Reaktorleervolumen auf. Beispielsweise beträgt die Gesamtfläche aller Feststoffmitnehmer-Vorrichtungen in einem Reaktor mit einem Leervolumen von 24 m$^3$ zwischen 4,8 und 24 m$^2$, wobei sich diese Fläche auf mehrere, beispielsweise 8 bis 10 Feststoffmitnehmer-Vorrichtungen verteilt. Eine derartige Anzahl von Feststoffmitnehmer-Vorrichtungen der genannten Größe bewirkt eine ausreichende Durchmischung des gesamten Reaktorinhaltes im Verlaufe der Hydrothermalreaktion.

Der zylindrische Druckreaktor, in dem die Hydrothermalreaktion durchgeführt wird, ist so ausgestaltet, daß das in ihm enthaltene Reaktionsgemisch aus Sand und Natronlauge möglichst schnell auf Reaktionstemperaturen von 200 bis 230°C aufgeheizt werden kann. Dazu weist der Druckreaktor Vorrichtungen auf, die eine Zufuhr von gesättigtem Wasserdampf bis zum Erreichen der gewünschten Reaktionstemperatur gestatten. Eine angestrebte möglichst feindisperse Verteilung des zugeführten Wasserdampfes läßt sich beispielsweise mittels Verteilerringen oder Zufuhrdüsen erreichen.

In einer bevorzugten Ausführungsform weist der Druckreaktor Vorrichtungen auf, die eine Dampfzufuhr seitlich über die Achse unmittelbar ins Zentrum des Reaktionsbehälters gestatten. Die Zuleitung über die Achse des Druckreaktors führt zu einer guten Verteilung des Dampfes im Reaktionsgemisch und zu einer raschen, zeitsparenden Kondensation. Ein gegebenenfalls zur Aufrechterhaltung der Reaktionstemperatur erforderliches Nachspeisen mit feindispersem Wasserdampf ist bei dieser Ausführungsform auch bei laufendem Reaktor ohne Zeitverlust möglich.

Im Hindblick auf eine möglichst rasche und vollständige Umsetzung in dem erfindungsgemäßen Verfahren wird Sand eingesetzt, dessen Gehalt an SiO$_2$ bezogen auf die Trockensubstanz mindestens 99,0 Gew.-% beträgt. Besonders gut geeignet und erfindungsgemäß bevorzugt sind Sandqualitäten mit mehr als 99,6 Gew.-% SiO$_2$ in der Trockensubstanz. Darüberhinaus soll der Grobkornanteil auf einem 0,4 mm-Sieb, ermittelt nach DIN 4188, vorzugsweise unterhalb von 20 Gew.-% liegen. Der Wassergehalt des Sandes beträgt üblicherweise etwa 4 bis 10 Gew.-%.

Die für die Hydrothermalreaktion nach dem erfindungsgemäßen Verfahren verwendete Natronlauge weist einen NaOH-Gehalt von 25 bis 35 Gew.-% auf. Eine Natronlauge mit der genannten Konzentration wird vorteilhaft unter Verwendung prozeßexterner Dünnlaugen und technischer Natronlauge mit einem NaOH-Gehalt von 50 Gew.-% hergestellt. Die Verwendung einer Natronlauge höherer Konzentration als 35 Gew.-% erbringt für die Hydrothermalreaktion zwar eine gewisse Verkürzung der Reaktionszeit, ist jedoch im Hindblick auf die Gesamtreaktionsführung sowie auf die Kosten nicht vorteilhaft.

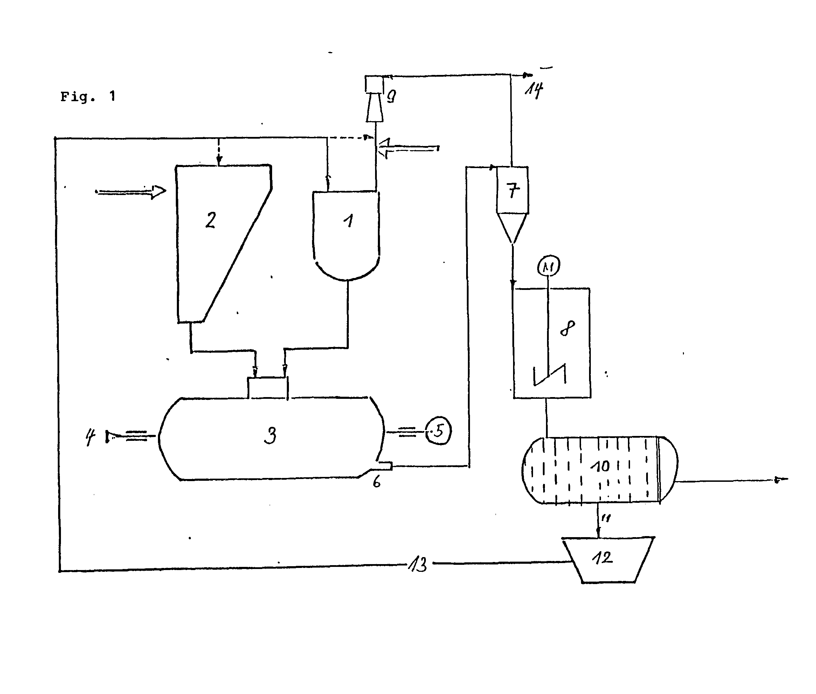

Das erfindungsgemäße Verfahren wird nun anhand des Fließschemas der Fig. 1, das eine Anlage für ein Verfahren zur hydrothermalen Herstellung von Natriumsilikatlösungen aus Sand und Natronlauge in stark vereinfachter Darstellung zeigt, näher erläutert.

Die Reaktions-Komponenten Sand und Natronlauge werden chargenweise aus den jeweiligen Vorratsbehältern 2 und 1 in den Reaktions-Druckreaktor 3 eingefüllt. Die wässrige Natronlauge-Sand-Suspension wird unter Rotieren des Druckreaktors 3 auf die gewünschte Reaktionstemperatur von 200 bis 230°C aufgeheizt. Dieses Aufheizen des Reaktionsgemisches erfolgt im Hindblick auf eine möglichst rasche und gleichzeitig konstengünstige Energierzufuhr durch unmittelbares Einleiten von Wasserdampf in den Reaktions-Druckreaktor 3 über den Dampfeinlaß 4. Je nach Isolierung des Hydrothermalreaktors und Vollständigkeit des Temperatur-Rückgewinns—d.h. damit in Abhängigikeit von der Temperatur des Reaktionsgemisches—sind etwa 70 bis 150 kg Wasserdampf unter 20 bar Druck pro 1000 kg Reaktionsgemisch einzubringen.

Um eine möglichst hohe Aufheizgeschwindigkeit zu erreichen, wird dem Reaktionsgemisch vorzugsweise gesättigter Wasserdampf bis zum Erreichen der gewünschten Reaktionstemperatur von 200 bis 230°C zugeführt, wobei sich gleichzeitig der dieser Temperatur entsprechende Druck des gesättigten Wasserdampfs im Reaktionsbehälter einstellt.

Das Reaktionsgemisch wird so lange unter den eingestellten Temperatur-/Druck-Bedingungen in dem rotierenden Reaktions-Druckreaktor 3 belassen, bis eine Probe der gebildeten Lösung das Erreichen eines Gewichtsverhältnisses $SiO_2:Na_2O$ anzeigt, das 5 bis 10% unter dem angestrebten Wert von 1,9 bis 2,1:1 liegt. Wird beispielsweise ein Gewichtsverhältnis $SiO_2:Na_2O$ von 2,0:1 gewünscht, so wird das Reaktionsgemisch so lange unter den angegebenen Bedingungen zur Reaktion gebracht, bis das Gewichtsverhältnis einen Wert von 1,8 bis 1,9:1 hat. Die hierfür erforderlichen Reaktionszeiten werden im Verlauf einiger Reaktionsabläufe empirisch durch Entnahme einer Probe der Reaktionsmischung oder aber bei Installation einer geeigneten in-line-Meßvorrichtung auch ohne Probeentnahme ermittelt. Dies geschieht vorteilhaft über eine Meßvorrichtung in der Achse des rotierenden Reaktions-Druckreaktors 3, so daß zum Zwecke der Probeentnahme der Reaktor nicht angehalten werden muß und die Hydrothermalreaktion so bei Erreichen der optimalen Raum-/Zeit-/Energieausbeute abgebrochen werden kann. Bevorzugt wird in einem solchen Fall die Dichte und/oder Viskosität der sich bildenden Natriumsilikatlösung gemessen.

Es ist ökonomisch vorteilhaft, die Gesamthydrothermalreaktion vorrangig auf die gewünschte $SiO_2$-Endkonzentration abzustimmen und dann die Umsetzung abzubrechen.

Durch die Auslaßöffnung 6 in dem Reaktions-Druckreaktor 3 wird der flüssige, unter einem Druck von 20 bis 25 bar stehende Reaktorinhalt über einen Dampfabscheider 7 in den Ausblasebehälter 8 überführt. Die Überführung des Reaktionsgemisches geschieht durch Eigendruck. Im Dampfabscheider 7 wird das Reaktionsgemisch in Wasserglaslösung und Dampfbrüden getrennt.

Während der Überführung des Reaktorinhalts in den Ausblasebehälter 8 findet eine Entspannung auf Normaldruck und eine Abkühlung auf etwa 100 bis 103°C statt. Bis zum Erreichen dieser Temperatur- und Druck-Werte läuft die Hydrothermalreaktion weiter ab, so daß nach Entspannung und Abkühlung eine $SiO_2$-Konzentration in der Lösung erreicht ist, die dem gewünschten Wert entspricht. Dabei steigt der Wert des Gewichtsverhältnisses $SiO_2:Na_2O$ auf den gewünschten Wert von 1,9 bis 2,1:1.

Das auf Normaldruck und einen Temperatur von 100 bis 103°C gebrachte Reaktionsgemisch wird anschließend auf ein Anschwemmfilter 10 überführt, wo Natriumsilikatlösung und ungelöster Sand voneinander getrennt werden. Das Filterbett des Anschwemmfilters 10 wird vorteilhaft vor dem Aufbringen der Gesamtmenge des zu filtrierenden Natriumsilikatlösung-Sand-Reaktionsgemisches durch eine von unten anströmende, im Kreislauf geführte geringe Menge eines Sand-Natronlauge-Gemisches in einer Weise aufbereitet, daß die Feinanteile des eingesetzten Sandes an die Oberfläche des Filterbettes geschwemmt werden und somit eine hinreichend wirksame Filterschicht ausbilden.

Als weiteres Filtermedium dient der in dem Reaktionsgemisch enthaltene Sand, der ebenfalls größere und feinere Bestandteile aufweist, wobei die Feinanteile ebenfalls an die Oberfläche des Filterbettes geschwemmt werden.

In einer bevorzugten Ausführungsform des erfindungsgemäßen Verfahrens wird dem im Kreislauf geführten Sand-Natronlauge-Gemisch in geringem Umfang, d.h. beispielsweise etwa 0,5 bis 2 kg pro Tonne Wasserglaslösung, ein Filterhilfsmittel zugesetzt. Als Filterhilfsmittel sind solche auf Perlite-Basis bevorzugt, da diese sich während des Filtrationsvorganges kaum lösen, jedoch unter den Bedingungen des Hydrothermal-Aufschlusses weitestgehend in Lösung gehen, wenn—wie unten ausgeführt—der Filterschlamm in den Hydrothermalreaktor überführt wird. Durch die Verwendung derartiger, unter den Bedingungen der Hydrothermalreaktion weitgehend löslicher Filterhilfsmittel werden nicht nur die Kosten für eine Filterschlammentsorgung minimiert, sondern darüberhinaus auch $SiO_2$ und Alkali zurückgewonnen sowie der Wärmeinhalt des Filterschlammes für den folgenden Reaktionszyklus genutzt.

Nach Beendigung der Filtration wird der Filterschlamm gegebenenfalls kurz gewaschen und dann über die Abwurfstelle 11 in den Filterschlamm-Sammelbehälter 12 abgeworfen. Diesem Behälter können gegebenenfalls auch prozeßexterne Filterschlämme geeigneter Zusammensetzung zugeführt werden.

Aus dem Filterschlamm-Sammelbehälter 12 werden dann in einer bevorzugten Ausführungsform des erfindungsgemäßen Verfahrens über ein Fördersystem 13 die gegebenenfalls mit wenig Wasser oder Natronlauge versetzten Filterschlämme alternativ in den Sand- oder Natronlauge-Vorratsbehälter 2 bzw. 1 transportiert. Dadurch wird erreicht, daß die nicht umgesetzten Rohstoffe einem weiteren Reaktionszyklus

## EP 0 164 073 B1

zugeführt werden, was eine ökonomische Verfahrensführung ermöglicht. Außerdem wird dabei der Energiegehalt der Filterschlämme, deren Temperatur noch immer relativ hoch ist, für den folgenden Verfahrenszyklus genutzt. Bei dieser Ausführungsform des Verfahrens ist in der Berechnung der einzusetzenden Mengen der Reaktionskomponenten der $SiO_2$—und NaOH-Gehalt der Filterschlämme von den Sand—bzw. Natronlauge-Mengen im Ansatz in Abzug zu bringen.

Die im Dampfabscheider 7 von dem Reaktionsgemisch abgetrennten Dampfbrüden werden von einem Strahlapparat angesaugt und zur Vorwärmung mindestens einer der Reaktionskomponenten eines weiteren Verfahrenszyklus verwendet. Vorteilhaft wird dabei die Natronlauge, gegebenenfalls im Gemisch mit rückgeführtem Filterschlamm, in einer Venturidüse 9 bis zur Grenze der Siedetemperatur der Lauge, d.h. auf etwa 100 bis 103°C, aufgeheizt. Der restliche Wasserdampf entweicht über eeine Tropfenabscheidung 14 ins Freie oder wird im Rahmen externer Prozesse für weiteren Energie-Rückgewinn genutzt.

Im Rahmen dieser Verfahrensführung werden klare Natriumsilikat-Lösungen erhalten, deren Gewichtsverhältnis $SiO_2$:$Na_2O$ im Bereich von 1,9 bis 2,1:1 liegt. Dabei wird der Energiebedarf durch eine geänderte Verfahrensführung und weitgehenden Energierückgewinn gegenüber aus dem Stand der Technik bekannten Verfahren deutlich erniedrigt. Die Nachteile der Verfahren, die aus der BE-PS 649 739 sowie der EP-PS 0 033 108 bekannt sind, werden weitgehend dadurch überwunden, daß man das Verfahren mit einem nur geringen Überschuß an Sand in einer Hydrothermalanlage durchführt, die eine bessere Handhabbarkeit der heißen Reaktionslösung gestattet. Trotz der Verwendung eines nur geringen Sandüberschusses im Reaktionsgemisch konnten die Reaktionszeiten deutlich verkürzt werden.

Der wichtigste Vorteil des erfindungsgemäßen Verfahrens ist jedoch, daß es—was bei großtechnischen Verfahren nur selten erreicht werden kann—eine Steigerung der Raum-/Zeitausbeuten, bezogen auf die reine Reaktionszeit, um 100% gestattet.

Die Bedeutung des vorliegenden großtechnischen Verfahrens wird besonders klar bei einem Vergleich der Reaktorleistungen im laufenden Betrieb unter großtechnischen Bedingungen z.B. für 12 Monate mit 8200 Betriebsstunden pro Jahr, wobei die unter großtechnischen Bedingungen erforderlichen Ausfallzeiten unterschiedlicher Art, z.B. Reinigung, Wartung und Reparaturen, berücksichtigt sind. Die folgende Kapazitätsbereichnung ist auf die Inlösungbringung von Sand, der 4,1% Wasser enthält, abgestellt und damit auf gelöstes $SiO_2$ bezogen. Dies hat den Vorteil, daß die so erhaltenen Werte unabhängig sind von Konzentrationen und Gewichtsverhältnissen $SiO_2$:$Na_2O$ im Reaktionsprodukt sowie auch von der eingebrachten Alkalimenge, die anderenfalls bei Berechnung einer Natriumsilikat-Kapazität zur Berechnung der Ausbeute eingebracht werden müßte.

Die Kapazitätsberechnung ist außerdem auf das Reaktornutzvolumen normiert. Wie aus dem Stand der Technik bekannt, werden Hydrothermalreaktoren üblicherweise nur auf 75% ihres Leervolumens gefüllt. Für den Vergleich der in der EP-PS 0 033 108 und den folgenden Beispielen 1 bis 6 beschriebenen Reaktoren (24 $m^3$ Leervolumen) wird einheitlich ein Reaktornutzvolumen von 18 $m^3$ berechnet.

Eine Berechnung der Raum-/Zeitausbeute der Natriumsilikat-Herstellung gemäß Beispiel 1 der BE-PS 649 739 ergibt bei einer mindestens achtstündigen Laufzeit pro Charge (Reaktionszeit und Nebenzeit) 1025 Chargen pro Jahr mit je 1817 kg gelöstem $SiO_2$ bei 4 $m^3$ Reaktornutzvolumen, was einer Menge von 465,7 t gelöstem $SiO_2$ pro $m^3$ Reaktornutzvolumen im Jahn entspricht. Bezogen auf eine Natriumsilikatlösung mit einer $SiO_2$-Konzentration von 30 Gew.-% und normiert auf eine großtechnische Anlage mit 18 $m^3$ Reaktornutzvolumen entspricht diese einer Jahreskapazität von 27 941 t Wasserglaslösung.

Eine Berechnung der Raum-/Zeitausbeuten der Verfahrensführung gemäß EP—A 0 033 108, Beispiel 2, ergibt bei einer Reaktionszeit von 1,5 h und einer Nebenzeit (für Befüllung des Reaktors und Überführung des Reaktionsproduktes auf die externe Filtrationsanlage) von 0,5 h eine Chargenzahl von 4100 pro Jahr mit je 2887 kg gelöstem $SiO_2$ bei einem Reaktor, dessen Nutzvolumen 18 $m^3$ ist. Daraus erreichnet sich eine Menge von 657,6 t an gelöstem $SiO_2$ pro $m^3$ Reaktornutzvolumen in einem Jahr. Bezogen auf eine Natriumsilikatlösung mit einer $SiO_2$-Konzentration von 30 Gew.-% und einen Reaktor von 18 $m^3$ Nutzvolumen beträgt die Jahreskapazität einer in der EP—A beschriebenen Anlage 39 456 t Produkt. Dies entspricht einer Kapazitätssteigerung von 41,2 % pro Jahr gegenüber der in der BE-PS 649 739 beschriebenen Anlage.

Die nachfolgenden Beispiele 1 bis 6 zeigen, daß mit dem erfindungsgemäßen Verfahren zur hydrothermalen Herstellung klarer Natriumsilikatlösungen die Reaktionszeit auf 60 min verkürzt werden kann. Zusammen mit Nebenzeiten von 30 min für die Befüllung des Reaktors ergeben sich somit 5466 Chargen pro Jahr mit je 6705 kg gelöstem $SiO_2$ in einem Reaktor, dessen Nutzvolumen 18 $m^3$ beträgt (vgl. Beispiele 1 und 4; die anderen Beispiele erbringen sogar höhere Werte). Dies entspricht einer Menge von 2036,2 t gelöstem $SiO_2$ pro $m^3$ Reaktornutzvolumen in einem Jahr. Bezogen auf eine Natriumsilikatlösung, deren Gehalt an $SiO_2$ 30 Gew.-% beträgt, errechnet sich für das erfindungsgemäße Verfahren eine Jahreskapazität von 122 171 t Wasserglaslösung bei einem Reaktorvolumen von 18 $m^3$. Gegenüber der Verfahrensweise nach der EP—A 0 033 108 bedeutet dies eine Steigerung der Kapazität von 209%.

Die Erfindung wird durch die nachfolgenden Beispiele 1 bis 6 näher erläutert. Die Durchführung der Beispiele erfolgte im großtechnischen Maßstab.

Als Reaktionsgefäß diente ein waagerecht angeordneter zylindrischer Druckreaktor aus Stahl mit einer Nickel-Auskleidung, der ein Leervolumen von 24 $m^3$ aufwies.

5

Die innen mit radialer Anordnung angeschweißten neun Feststoff-Mitnehmerbleche aus Nickel wiesen eine Fläche von jeweils 0,8 m² auf; die Gesamt-Mitnehmerfläche betrug somit 7,2 m². Der Druckbehälter drehte sich mit einer Drehzahl von 6 Umdrehungen pro min um seine horizontale Achse. Die Beheizung erfolgte mit gesättigtem, über einen Verteilerung feindispers eingespeisten Wasserdampf unter einem Druck von 20 bzw. 25 bar über eine Öffnung in der Achse und ein angesetztes Rohr direkt in den Reaktionsbehälter.

Der eingesetzte Sand enthielt 4,1 Gew.-% Wasser; sein $SiO_2$-Gehalt, bezogen auf die Trockensubstanz, war 99,8 Gew.-%. Die Granulometrie nach DIN 4188 erbrachte einen Grobkornanteil auf dem 0,4 mm-Sieb von 12,9 Gew.-%.

Der aus dem Feststoff-Filter anfallende Filterschlamm wurde in den in Tabelle 1 angegebenen Mengen mittels einer 2-Zylinder-Kolbenpumpe in den Natronlauge-Vorlagebehälter gepumpt. Die Versuchsanordnung entsprach im wesentlichen Fig. 1.

Die Natronlauge wurde aus technischer Natronlauge mit einem NaOH-Gehalt von 50 Gew.-% und prozeßexterner Dünnlauge mit einem NaOH-Gehalt von 14 Gew.-% hergestellt und in einer Venturidüse oberhalb des Natronlauge-Vorratsbehälters mit den Dampfbrüden auf etwa 103°C aufgeheizt.

Aus den vorangehenden Chargen enthielt der Reaktor jewsils ca. 150 kg Sand (bezogen auf Trockensubstanz) und 150 kg Natriumsilikatlösung einer Zusammensetzung wie unter den jeweiligen Beispielen angegeben. Die Beispiele wurden aus jeweils mehreren Betriebschargen mit gleichen Ansatz- und Reaktionsverhältnissen ausgewählt, so daß der im Reaktor verbleibende Rest an Reaktionslösung auch jeweils weitestgehend die im Beispiel angestrebte Zusammensetzung des Endproduktes aufweis.

Die Reaktionskomponenten (Sand, Filterschlamm, 50 %ige und 14 %ige Natronlauge, Dampf) wurden in den Reaktor gegeben, wobei ihre Mengen über eine Wägevorrichtung auf ± 10 kg genau bestimmt wurden. Der Reaktor wurde anschließend verschlossen und in Rotation versetzt. Durch direktes Einleiten von Wasserdampf wurde das Reaktionsgemisch auf die angegebene Reaktionstemperatur aufgeheizt und bei dieser Temperatur unter gelegentlicher Nachspeisung von Wasserdampf belassen. Dabei wurde in den Beispielen 1 bis 3 Wasserdampf mit 25 bar entsprechend 225+3°C und in den Beispielen 4 bis 6 Dampf mit 20 bar entsprechend 210±2°C verwendet.

Nach der angegebenen Reaktionszeit bei dieser Temperatur wurde der Reaktor zum Stillstand gebracht. Über eine angeflanschte Rohrleitung wurde das Reaktionsgemisch mittels seines Eigendruckes in einen Ausblasebehälter von 30 m³ Volumen überführt. Auf diesem Wege wurde das Reaktionsgemisch mittels eines Abscheiders in Dampfbrüden und etwa 105°C heiße Wasserglaslösung getrennt. Die Brüden wurden von einem Strahlapparat angesaugt und zur Vorwärmung der Mischlauge des nächsten Ansatzes in einer Venturidüse bis zur Grenze der Siedetemperatur der Lauge (etwa 103°C) verwendet. Der restliche Wasserdampf wurde zur Aufheizung von Brauchwasser für prozeßexterne Zwecke verwendet.

Die Filtration der etwa 100°C heißen Wasserglaslösung erfolgte mittels eines Matura$^R$-Anschwemmfilters. Zunächst wurde eine Menge von etwa 3 m³ der Reaktionslösung in dem zum Filter gehörigen Anschwemmbehälter gepumpt, dort mit 15 kg Filterhilfsmittel auf Perlite-Basis versetzt und diese Suspension in den Ausblasebehälter zurückgepumpt. Zum Anschwemmen des Matura$^R$-Filters wurden anschließend 3 m³ weitere Reaktionslösung aus dem Ausblasebehälter in den Anschwemmbehälter der Filteranlage gepumpt. Nach Zugabe von 7,5 kg des Filterhilfsmittels wurde die Suspension so lange über Filter und Ausblasebehälter im Kreise gepumpt, bis eine klare Lösung vorlag. Erst danach wurde die gesamte Reaktionsmischung aus dem Ausblasebehälter über das angeschwemmte Filter klar filtriert.

Die so erhaltenen Natriumsilikatlösungen waren wasserklar und farblos und wurden bezüglich ihres $SiO_2$- und $Na_2O$-Gehaltes analysiert.

Aus Gründen der besseren Reproduzierbarkeit wurde der in den Beispielen verwendete Filterschlamm aus einem Gemisch mehrerer gut vermischter Chargen nach vorheriger Charakterisierung entnommen. Der Schlamm enthielt im Feststoff (nach Schätzungen aus Analysenwerten, Pulveraufnahmen und Sedimentationsmessungen) etwa 65 Gew.-% Sand, 25 Gew.-% Filterhilfsmittel, 5 Gew.-% wasserlösliches Natriumsilikat (Gewichtsverhältnis $SiO_2:Na_2O=2,0:1$) aus der dem Filterschlamm trotz Waschung anhaftenden Lösung sowie etwa 5 Gew.-% Schwermetallsilikat und andere nicht definierte Rükstände aus der Hydrothermalreaktion.

Die jeweiligen Stoffmengen der Ansatzbeispiele sind in Tabelle 1, die Reaktionsbedingungen und Produkt-Charakterisierungen in Tabelle 2 aufgeführt.

# EP 0 164 073 B1

TABELLE 1
Ansatzverhältnisse

| Beispiel Nr. | Einsatzstoffe und -mengen[1] | | | | % NaOH in Ansatzlauge | Gewichtsverh. SiO$_2$:Na$_2$O im Ansatz[4] | einge-speister Dampf[1] | Gesamt ansatz-menge[5] |
|---|---|---|---|---|---|---|---|---|
| | Sand[2] | Filter-schlamm[3] | Natronlauge 50%ig | 14%ig | | | | |
| 1 | 7,58 | — | 6,33 | 8,97 | 28,9 | 2,16 | 3,3 | 26,5 |
| 2 | 7,73 | 0,25 | 7,35 | 6,56 | 34,8 | 2,18 | 3,2 | 24,5 |
| 3 | 7,73 | 0,25 | 6,90 | 5,30 | 34,8 | 2,30 | 4,0 | 24,5 |
| 4 | 7,60 | — | 6,33 | 8,87 | 28,9 | 2,16 | 2,8 | 26,0 |
| 5 | 7,77 | 0,15 | 6,56 | 5,04 | 30,2 | 2,18 | 3,4 | 23,2 |
| 6 | 7,77 | 0,15 | 6,90 | 5,30 | 34,8 | 2,30 | 4,0 | 24,5 |

[1] in t pro Reaktorfüllung
[2] mit 4,1 Gewichts-% Feuchtigkeit; zuzügl. im Reaktor verbliebener Restmengen entsprechend Text
[3] feucht, Zusammensetzung: 65% Sand, 25% Filterhilfsmittel, 5% wasserlösliches Natriumsilikat, 5% Schwermetallsilikate und weitere Rückstände
[4] unter Berücksichtigung aller im Reaktor vorliegenden SiO$_2$- und Na$_2$O-Komponenten
[5] einschl. Dampf- und im Reaktor verbliebener Restmengen aus Vorchargen.

TABELLE 2
Reaktionsbedingungen und Produktchärakterisierung

| Beispiel Nr. | Reaktor-füllgrad[1] | HT-Reaktionsbedingungen | | | Filtriertes Endprodukt | | | |
|---|---|---|---|---|---|---|---|---|
| | | (Minuten) AZ[2] | RZ[3] | Reaktions-temperatur (°C) | Dicyte[4] | %SiO$_2$ | % Na$_2$O | Gewichts verhälten SiO$_2$/Na$_2$ |
| 1 | 73 | 35 | 27 | 225 | 1,47 | 27,00 | 13,17 | 2,05 |
| 2 | 67 | 28 | 29 | 225 | 1,58 | 31,04 | 15,52 | 2,00 |
| 3 | 67 | 28 | 35 | 225 | 1,52 | 30,01 | 13,04 | 2,20 |
| 4 | 73 | 28 | 32 | 210 | 1,48 | 27,05 | 13,37 | 2,02 |
| 5 | 63 | 25 | 29 | 210 | 1,52 | 29,00 | 14,50 | 2,00 |
| 6 | 66 | 27 | 36 | 210 | 1,54 | 29,90 | 13,91 | 2,15 |

[1] in Volumen-%, aus Ansatzmengen und Ausbeuten ermittelt, auf Normaldruck und Gesamtleervolumen (24 m$^3$) bezogen
[2] Aufheizzeit=Zeit zwischen SchlieYen des Reaktors und Erreichen der Reaktionstemperatur
[3] Reaktionszeit=Zeit zwischen Erreichen der Reaktionstemperatur und Überführen der Reaktionslösung in den Ausblasebehälter
[4] bei 20°C

Ergebnisse:

*Beispiel 1* belegt einen in Hinblick auf die vorgelegte relativ niedrige Ansatzlaugen-Konzentration (hoher Anteil preiswerter Dünnlauge in der Mischlauge) und die erzielte Raum-/Zeit-/Energieausbeute günstigen Ansatz ohne Filterschlammrückführung und bei nur sehr geringem Sandüberschuß. Bei Abbruch der Hydrothermalreaktion nach 27 min betrug gemäß einer Analyse einer Zwischenprobe das Gewichtsverhältnis SiO$_2$:Na$_2$O in filtrierter Reaktionslösung 1,99 bei etwa 26,3 Gew.-% SiO$_2$.

Der in *Beispiel 2* angestrebte stark erhöhte Feststoffgehalt in der Reaktionslösung wurde gegenüber

7

Beispiel 1 bei nur leicht verlängerter Reaktionszeit trotz Filterschlammrückführung durch deutlich erhöhte Ansatzlaugen-Konzentration und gleichzeitig höheren Sandüberschuß erreicht. Die Gesamtausbeute wurde dadurch jedoch merklich verringert. Das Reaktionsgemisch wurde nach 29 min Dauer der Hydrothermalreaktion mit einem Gewichtsverhältnis $SiO_2:Na_2O$ von 1,97:1 ($SiO_2$-Gehalt 28,7 Gew.-%) in den Ausblasebehälter überführt.

In *Beispiel 3* wurde im Hindblick auf die Erzielung eines höheren Gewichtsverhältnisses $SiO_2:Na_2O$ in der Reaktionslösung von 2,2 gegenüber Beispiel 1 die Natriumdyhydroxidmenge in der Ansatzlauge erniedrigt. Das Reaktionsgemisch wurde nach 35 min Dauer der Hydrothermalreaktion mit einem Gewichtsverhältnis $SiO_2:Na_2O$ von 2,15:1 (29,4 Gew.-% $SiO_2$) in den Ausblasebehälter überführt.

Die *Beispiele 4 bis 6* wurden weitgehend analog den Beispielen 1 bis 3 durchgeführt. Dabei war zur Erzielung der angestrebten Gewichtsverhältnisse $SiO_2:Na_2O$ infolge der erniedrigten Reaktionstemperatur und des erniedrigten Druckes (Wasserdampf von 20 bar anstelle von 25 bar) eine verlägerte Reaktionszeit erforderlich.

**Patentansprüche**

1. Verfahren zur hydrothermalen Herstellung klarer Natriumsilikatlösungen mit einem Gewichtsverhältnis $SiO_2:Na_2O$ von 1,9 bis 2,1:1 durch Umsetzung eines Überschusses Sand mit mindestens 99 Gew.% $SiO_2$ bezogen auf Trockensubstanz, mit wässriger Natriumhydroxidlösung einer Konzentration von 25 bis 35 Gew.-% bei Temperaturen im Bereich von 200 bis 230°C und den diesen Temperaturen entsprechenden Drücken von gesättigtem Wasserdampf in einem rotierenden zylindrischen geschlossenen Druckreaktor, der um seine horizontale Achse drehbar gelagert ist, sowie nachfolgender Normaldruck-Filtration des heißen, noch ungelösten Sand enthaltenden Reaktionsgemischs unter Verwendung des nicht umgesetzten Sandes als Filtermedium, dadurch gekennzeichnet, daß man

a) das einen Sandüberschuß von 5 bis 10 Gew.-%, bezogen auf den Silikatgehalt der angestrebten Natriumsilikatlösung, und eine mit Prozeßwärme vorgeheizte 25 bis 35 %ige Natriumhydroxidlösung enthaltendes Reaktionsgemisch

b) in dem genannten Reaktor, der mehrere Feststoff-Mitnehmervorrichtungen mit einer Fläche von 0,2 bis 1 m² pro m³ Reaktor-Leervolumen aufweist,

c) bei einem Reaktor-Füllgrad, bezogen auf das Gesamt-Leervolumen bei Raumtemperatur, von 65 bis 75 Volumenprozent einschließlich des zum Aufheizen unmittelbar eingespeisten, möglichst feindispersen Wasserdampfes,

d) bis zum Erreichen eines Wertes des Gewichtsverhältnisses $SiO_2:Na_2O$ in der Reaktionslösung umsetzt, der 5 bis 10% unter dem angestrebten Wert von 1,9 bis 2,1:1 liegt,

e) unmittelbar anschließend das Reaktionsgemisch durch Eigendruck in einen Ausblasebehälter überführt, wobei der Reaktorinhalt bus zu dem angestrebten Gewichtsverhältnis $SiO_2:Na_2O$ von 1,9 bis 2,1:1 weiterreagiert,

f) dabei das Reaktionsgemisch nach Entspannen auf Normaldruck unter Dampfabscheidung auf 95 bis 103°C abkühlt, wobei die Hydrothermalreaktion zum Stillstand kommt, und

g) unter Verwendung des überschüssigen Sandes und gegebenenfalls eines zusätzlichen Filterhilfsmittels filtriert.

2. Verfahren nach Anspruch 1, dadurch gekennzeichnet, daß man Sand mit einem $SiO_2$-Gehalt von mindestens 99,6 Gew.-% in der Trockensubstanz, bei einem Grobkornanteil auf dem 0,4 mm-Sieb von bis zu 20 Gew.-%, einsetzt.

3. Verfahren nach Ansprüchen 1 und 2, dadurch gekennzeichnet, daß man eine Natriumhydroxidlösung verwendet, die durch Verdünnen technischer Natronlauge mit einem NaOH-Gehalt von 50 Gew.-% mit prozeßexterner Dünnlauge hergestellt wurde.

4. Verfahren nach Ansprüchen 1 bis 3, dadurch gekennzeichnet, daß ein Drückreaktor verwendet wird, dessen Innenauskleidung und die angeschweißten Feststoff-Mitnehmervorrichtungen aus Nickelmetall bestehen.

5. Verfahren nach Ansprüchen 1 bis 4, dadurch gekennzeichnet, daß man als zusätzliches Filterhilfsmittel ein unter den Bedingungen der Hydrothermalreaktion lösliches, bei 100°C und 1 bar jedoch weitgehend unlösliches silikatisches Material verwendet.

6. Verfahren nach Anspruch 5, dadurch gekennzeichnet, daß man als zusätzliche Filterhilfsmittel Perlite verwendet.

7. Verfahren nach Ansprüchen 1 bis 6, dadurch gekennzeichnet, daß man den Filterrückstand prozeßintern zurückführt, wobei ein dem $SiO_2$- und Alkali-Gehalt des Filterschlammes entsprechender Anteil des Sandes und der Natronlauge im Ansatz zum Abzug gebracht wird.

8. Verfahren nach Ansprüchen 1 bis 7, dadurch gekennzeichnet, daß man den zum Aufheizen verwendeten gesättigten, feindispers verteilten Wasserdampf über eine Öffnung in der Achse des zylindrischen Druckreaktors und ein angesetztes Rohr zuführt.

9. Verfahren nach Ansprüchen 1 bis 8, dadurch gekennzeichnet, daß man zur Filtration des Reaktionsgemisches ein Anschwemmfilter verwendet.

# EP 0 164 073 B1

## Revendications

1. Procédé pour la préparation hydrothermique de solutions limpides de silicates de sodium ayant un rapport pondéral $SiO_2:Na_2O$ de 1,9:1 à 2,1:1, par réaction d'un sable en excès comportant au moins 99% en poids de $SiO_2$ par rapport à la matière sèche, avec une solution aqueuse d'hydroxyde de sodium ayant une concentration de 25 à 35% en poids, à des températures dans la plage de 200 à 230°C et sous les pressions de vapeur d'eau saturée correspondant à ces temperatures, dans un réacteur cylindrique rotatif fermé tenant la pression qui est disposé de façon à pouvoir tourner autour de son axe horizontal, et filtration subséquente sous la pression normale du mélange réactionnel chaud, contenant encore du sable non dissous, avec utilisation en tant que milieu filtrant du sable n'ayant pas réagi, procédé caractérisé en ce que:

a) on fait réagir la mélange réactionnel contenant un excès de sable de 5 à 10% en poids, par rapport à la teneur en silicate de la solution de silicate de sodium recherchée, et une solution d'hydroxyde de sodium à 25—35%, préchauffée au moyen de chaleur du processus,

b) dans ledit réacteur, qui présente plusieurs dispositifs d'entraînement de matières solides, ayant une surface de 0,2 à 1 $m^2$ par $m^3$ de volume à vide du réacteur,

c) à un degré de remplissage du réacteur, par rapport au volume total à vide du réacteur à la température ambiante, allant de 65 à 75% en volume, y compris la vapeur d'eau la plus finement dispersée possible, introduite directement pour le chauffage,

d) jusqu'à l'obtention dans la solution réactionnelle d'une valeur du rapport pondéral $SiO_2:Na_2O$ qui est de 5 à 10% au-dessous de la valeur recherchée de 1,9:1 à 2,1:1,

e) le mélange réactionnel est ensuite directement transféré, sous l'effet de sa pression propre, dans un récipient de détente, le contenu du réacteur continuant de réagir jusqu'au rapport pondéral $SiO_2:Na_2O$ de 1,9:1 à 2,1:1 recherché,

f) le mélange réactionnel étant refroidi jusqu'à 95—103°C après détente jusqu'à la pression normale avec séparation de la vapeur, ce par quoi la réaction hydrothermique s'arrête, et

g) on filtre en utilisant le sable en excès et éventuellement un adjuvant de filtration supplémentaire.

2. Procédé selon la revendication 1, caractérisé en ce que l'on utilisé du sable ayant une teneur en $SiO_2$ d'au moins 99,6% en poids, en matière sèche, avec une proportion de gros grains sur le tamis de 0,4 mm allant jusqu'à 20% en poids.

3. Procédé selon la revendication 1 ou 2, caractérisé en ce que l'on utilise une solution d'hydroxyde de sodium qui a été préparée par dilution d'une solution d'hydroxyde de sodium industrielle ayant une teneur en NaOH de 50% en poids, avec une solution alcaline diluée extérieure au processus.

4. Procédé selon l'une quelconque des revendications 1 à 3, caractérisé en ce que l'on utilise un réacteur tenant la pression, dont le revêtement interne et les dispositifs d'entraînement de matières solides soudés sont constitués de nickel.

5. Procédé selon l'une quelconque des revendications 1 à 4, caractérisé en ce que l'on utilise en tant qu'adjuvant de filtration supplémentaire un matériau siliceux soluble dans les conditions de la réaction hydrothermique mais largement insoluble à 100°C et sous 1 bar.

6. Procédé selon la revendication 5, caractérisé en ce que l'on utilise en tant qu'adjuvant de filtration supplémentaire de la perlite.

7. Procédé selon l'une quelconque des revendications 1 à 6, caractérisé en ce que l'on recycle dans le processus le résidu de filtration, en déduisant de la teneur en $SiO_2$ et en alcali de la suspension de filtration une proportion correspondante du sable et de la solution d'hydroxyde de sodium dans le mélange de départ.

8. Procédé selon l'une quelconque des revendications 1 à 7, caractérisé en ce que l'on envoie par un orifice dans l'axe du réacteur cylindrique tenant la pression et un conduit inséré la vapeur d'eau saturée, finement dispersée, utilisée pour le chauffage.

9. Procédé selon l'une quelconque des revendications 1 à 8, caractérisé en ce que l'on utilise un filtre à couches pour la filtration du mélange réactionnel.

## Claims

1. A process for the hydrothermal production of clear sodium silicate solutions with a ratio by weight of $SiO_2$ to $Na_2O$ of from 1.9 to 2.1:1 by reaction of an excess of sand containing at least 99% by weight of $SiO_2$, based on dry matter, with an aqueous sodium hydroxide solution having a concentration of from 25 to 35% by weight at temperatures of from 200 to 230°C and under saturated steam pressures corresponding to those temperatures in a rotating, cylindrical, closed pressure reactor which is mounted for rotation about its horizontal axis, followed by filtration under normal pressure of the hot reaction mixture still containing undissolved sand using the unreacted sand as filter medium, characterized in that

a) the reaction mixture containing an excess of sand of from 5 to 10% by weight, based on the silicate content of the desired sodium silicate solution, and a 25 to 35% sodium hydroxide solution preheated by process heat

b) is reacted in the above-mentioned reactor, which comprises several solids entraining elements having an area of from 0.2 to 1 $m^2$ per $m^3$ of empty reactor volume

c) at a reactor filling level, based on the total empty volume at room temperature, of from 65 to 75% by volume, including the very finely disperse steam directly introduced for heating,

d) until the ratio by weight of $SiO_2$ to $Na_2O$ in the reaction solution reaches a value which is 5 to 10% below the desired value of from 1.9 to 2.1:1,

e) immediately after which the reaction mixture is transferred under its own pressure to a blow-off vessel, the contents of the reactor continuing to react to the desired ratio by weight of $SiO_2$ to $Na_2O$ of from 1.9 to 2.1:1,

f) the reaction mixture is cooled to 95—103°C with separation of steam after expansion to normal pressure, the hydrothermal reaction coming to a standstill, and

g) is filtered using the excess sand and, optionally, an additional filter aid.

2. A process as claimed in Claim 1, characterized in that the sand used has an $SiO_2$ content of at least 99.6% by weight, based on dry matter, with a coarse grain fraction on a 0.4 mm sieve of up to 20% by weight.

3. A process as claimed in Claims 1 and 2, characterized in that the sodium hydroxide solution used is produced by diluting technical sodium hydroxide containing 50% by weight of NaOH with thin lye emanating from outside the process.

4. A process as claimed in Claims 1 to 3, characterized in that a pressure reactor, of which the internal lining and the welded-on solids entraining elements consist of nickel metal, is used.

5. A process as claimed in Claims 1 to 4, characterized in that a silicate material which is soluble under the conditions of the hydrothermal reaction, but largely insoluble at 100°C/1 bar, is used as the additional filter aid.

6. A process as claimed in Claim 5, characterized in that perlite is used as the additional filter aid.

7. A process as claimed in Claims 1 to 6, characterized in that the filter residue is recycled within the process, a proportion of the sand and the bottom hydroxide in the batch corresponding to the $SiO_2$ and alkali content of the filter sludge being deducted.

8. A process as claimed in Claims 1 to 7, characterized in that the saturated, finely disperse steam used for heating is fed in through an opening in the shaft of the cylindrical pressure reactor and an attached pipe.

9. A process as claimed in Claims 1 to 8, characterized in that a settling filter is used for filtration of the reaction mixture.

Fig. 1